# NEUE EUROPÄISCHE PATENTSCHRIFT

(11) **EP 0 813 941 B2**
(45) Veröffentlichungstag und Bekanntmachung des Hinweises auf die Entscheidung über den Einspruch: **13.01.2010**
(45) Hinweis auf die Patenterteilung: 03.08.2005
(21) Anmeldenummer: 97109751.4
(22) Anmeldetag: 16.06.1997
(51) Int. Cl.: B27M 1/08, B27C 9/02

(54) **Abbundanlage zur Bearbeitung von Strangmaterial**
Machine tool for working elongated material
Machine-outil pour l'usinage de pièces allongées

(30) Priorität: 17.06.1996 DE 19624138
(43) Veröffentlichungstag der Anmeldung: 29.12.1997
(73) Patentinhaber: Hundegger, Hans, D-87749 Hawangen (DE)
(72) Erfinder: Hundegger, Hans, D-87749 Hawangen (DE)
(74) Vertreter: Rapp, Bertram

(56) Entgegenhaltungen:
- EP-A- 0 319 032
- EP-A- 0 608 746
- DE-C- 182 321
- DE-U- 9 016 128
- US-A- 1 789 398
- US-A- 2 672 170
- US-A- 4 589 174

## Beschreibung

Die Erfindung betrifft eine Abbundanlage zur Bearbeitung von Strangmaterial, insbesondere zur Bearbeitung von stangenförmigen Holzwerkstücken, Holzbalken, Brettern und dergleichen, wobei die Abbundanlage eine Auflage und eine Transporteinrichtung zum Auflegen und Transportieren des Strangmaterials aufweist, mit wenigstens einem, entlang der Transporteinrichtung angeordneten Bearbeitungsaggregat mit einer von einem Spindelantrieb angetriebenen Werkzeugspindel, welche in einer Ebene verschiebbar ist und an der ein Werkzeug für die Bearbeitung des Werkstückes angeordnet ist. Die Werkzeugspindel ist um eine zur Spindelachse senkrechte Drehachse drehbar.

Eine Holzbearbeitungsanlage mit den im Oberbegriff des Anspruchs 1 genannten Merkmalen geht beispielsweise aus der EP 608 746 A1 hervor, die ein Portalgehäuse aufweist, das von einer Führungsvorrichtung senkrecht in horizontaler Richtung durchsetzt wird, und an dem ein in horizontaler und vertikaler Richtung beweglicher Kreuzschlitten mit einem drehbar gelagerten Spindelmotor angeordnet ist. Auf diesen Spindelmotor werden abwechselnd die in einem Werkzeugmagazin vorgehaltenen Werkzeuge aufgesetzt.

Die DE 90 16 128 U1 offenbart eine Werkzeugmaschine zur Herstellung von Verbindungen an Konstruktionselementen von Möbeln oder dergleichen, mit einer oder mehreren Bearbeitungseinheiten, wobei zumindest zwei Endbereiche des Werkstückes gleichzeitig bearbeitet werden können. Jede Bearbeitungseinheit wird von einem Getriebemotor gedreht, der die Bewegung der Bearbeitungseinheit in Richtung auf das Werkstück zu (durch eine exzentrische Bewegung) steuert.

Eine aus der DE-A- 42 08 233 bekannte Abbundanlage weist eine langgezogene Auflage für das Werkstück und eine Transporteinrichtung auf, mit der das Werkstück entlang der Auflage transportiert werden kann. Die Transporteinrichtung weist einen Mitnehmer auf, der mit dem Werkstück verbindbar ist und, motorisch entlang einer parallel zur Auflage verlaufenden Führungsschiene getrieben, das Werkstück durch die Abbundanlage hindurch zieht.

Die vorbeschriebene Abbundanlage wird dazu verwendet, die aufwendige Handarbeit eines Zimmermannes maschinell zu unterstützen. Hierbei ist die Abbundanlage mit einer Computersteuerung verbunden, die die Daten eines Konstruktionsprogrammes übernimmt und aus diesen Daten die entsprechenden Bearbeitungsschritte für die Erstellung eines entsprechenden Holzwerkstückes für ein Dachstuhl oder ein sonstiges Holzbauwerk ermittelt. Hierzu weißt die Abbundanlage eine Vielzahl von verschiedenen Bearbeitungsaggregaten auf, die entsprechend der Vorgaben der Steuerung nach dem Konstruktionsplan eingesetzt werden. Durch die exakte Führung des Holzstückes durch die Transporteinrichtung wird eine exakte Bearbeitung erreicht.

Der Vorteil der bekannten Abbundanlage liegt darin, daß die vormals aufwendige Handarbeit durch den Zimmermann nun vollständig automatisiert erfolgt. Dieser Effekt wird durch den zunehmenden Einsatz von Computern in der Konstruktion der Dachstühle weiter verstärkt, da automatisierte Abbundanlagen über eine CNC-Steuerung die Daten für die Bearbeitung der Werkstücke direkt aus dem Computer des Konstrukteurs des Dachstuhls übernehmen. Eine derartige CNC-gesteuerte Abbundanlage ist aus der DE-C-34 20 080 bekannt.

Neben der Erstellung von Dachstühlen sind aber auch andere Abbundarbeiten zum Beispiel die Herstellung von Fertighäusern usw. mit den vorbeschriebenen Abbundanlagen möglich.

Im Verlaufe das Transportes durch die Anlage passiert das Werkstück zumindest ein, in der Regel jedoch mehrere verschiedene Bearbeitungsaggregate, die das Werkstück durch die üblichen Verfahren wie zum Beispiel Fräsen, Bohren oder Sägen bearbeiten. Dabei werden an dem Werkstück sowohl Längsbearbeitungen, wie das Einbringen von Längsnuten, das Abfasen von Kanten oder dergleichen, als auch Querbearbeitungen wie zum Beispiel das Ablängen unter einem bestimmten Winkel oder das Einbringen von Quernuten oder Bohrungen für Zapfen usw. vorgenommen. Zur Durchführung dieser verschiedenen Bearbeitungsschritte sind unterschiedlichste Werkzeuge, wie zum Beispiel Stirn- und Radialfräser, runde und kantige Radialfräser, verschiedene Bohrer oder Sägen erforderlich.

Nachteilig ist bei den gattungsgemäßen Abbundanlagen jedoch, daß für die verschiedenen, an dem jeweiligen Werkstück vorzunehmenden Bearbeitungsschritte entweder jeweils gesonderte, hintereinander angeordnete Bearbeitungsaggregate vorgesehen werden müssen oder, wenn bereits ein geeignetes Bearbeitungsaggregat in der Anlage vorhanden ist, nach der ersten Bearbeitung das Werkzeug gewechselt und das Werkstück nochmals für eine weitere Bearbeitung durch die Anlage geschickt werden muß. Dieser Nachteil tritt nicht nur dann auf, wenn verschiedene Bearbeitungsschritte an einem Werkstück erforderlich sind, sondern auch dann, wenn mehrere Werkstücke hintereinander zu bearbeiten sind, wobei an den verschiedenen Werkstücken jeweils verschiedene Bearbeitungen vorgenommen werden sollen.

Durch den Wechsel der Werkzeuge wird der Durchsatz der Abbundanlagen jedoch erheblich verringert, da der kontinuierliche Bearbeitungsprozeß jeweils unterbrochen werden muß, um das Werkstück erneut der Anlage zuzuführen. Weiterhin fallen Rüstzeiten an, die die Bearbeitungszeiten zusätzlich erhöhen.

Die Verwendung zusätzlicher Bearbeitungsaggregate führt dazu, daß die Abbundanlage zum einen aufwendiger wird und damit die Herstellungskosten der Anlage steigen, da für jedes Bearbeitungsaggregat eine entsprechende Beweglichkeit vorgesehen werden muß, die entsprechende Antriebsmittel benötigen. Zum anderen nimmt der für die Aufstellung der Anlage notwendige Raumbedarf mit jedem weiteren Bearbeitungsaggregat zu. Der zusätzliche Raumbedarf, zum Beispiel in einer Halle, einer derartigen Anlage ist beachtlich, da die Anlagen aufgrund der Länge der mit ihr zu bearbeitenden Werkstücke bereits verhältnismäßig groß sind. So muß zum Beispiel bei Anlagen zur Bearbeitung von Dachsparren alleine für die Zuführung und die Entnahme der Werkstücke, die in der Regel eine Länge von bis zu 10 m haben, eine Länge der Abbundanlage von mehr als 20 m vorgesehen werden.

Aufgabe der Erfindung ist es daher, eine kostengünstig herzustellende Abbundanlage zu schaffen, auf der Strangmaterial wie vorbeschrieben mit mehreren Werkzeugen bei möglichst geringem Raumbedarf der Abbundanlage bearbeitet werden.

Diese Aufgabe wird durch eine Abbundanlage mit den Merkmalen des Patentanspruchs 1 gelöst.

Durch die erfindungsgemäße Ausgestaltung der Abbundanlage ist es nun möglich, an der Werkzeugspindel eines Bearbeitungsaggregates mehrere, unabhängig voneinander einsetzbare Werkzeuge anzuordnen. Hierdurch kann die Anzahl der benötigten Bearbeitungsaggregate deutlich reduziert werde, wodurch sich die Baugröße der Anlage ebenfalls verringert. Indem die Position der Werkzeugspindel relativ zum Werkstück beliebig veränderlich ist, kann auf einer Spindel ein großes Spektrum unterschiedlichster Werkzeuge angeordnet werden. Da der Vorschub durch die Transporteinrichtung, also durch die Bewegung des Werkstückes durch die Anlage vollzogen wird, entfällt die raumaufwendige Verfahrbarkeit des Bearbeitungsaggregates in Vorschubrichtung und die einzelnen Bearbeitungsaggregate können mit geringerem Abstand zueinander angeordnet werden.

So kann zum Beispiel bei einer Ausführungsform der Erfindung die Werkzeugspindel in ihrem mittleren Bereich gelagert sein, so daß sie zwei aus der Lagerung herausstehende freie Enden aufweist, die mit Werkzeugen bestückbar sind. An einem Ende der Spindel kann beispielsweise ein Stirnfräser angeordnet sein, mit dem einerseits die Stirnseite des Werkstückes bearbeitbar ist, als auch, bei um 90° gedrehter Werkzeugspindel und entsprechend in der Ebene quer zum Werkstück verfahrenem Bearbeitungsaggregat, die Seiten des Werkstückes bearbeitbar sind. An dem anderen, gegenüberliegenden Ende der Spindel ist zum Beispiel ein weiteres Werkzeug angeordnet, mit dem andere Bearbeitungsschritte durchgeführt werden.

Bei einer besonders vorteilhaften Ausgestaltung der Erfindung sind an der Werkzeugspindel mehrere Werkzeuge angeordnet. Diese sind aufgrund der durch die Erfindung hinzugewonnenen Flexibilität der Abbundanlage vielseitig einsetzbar. So kann zum Beispiel ein Radialfräser mit relativ großem Außendurchmesser verwendet werden, an dessen Seite, der Spindellagerung abgewandt, ein kleiner Fingerfräser als Stirnfräser angeordnet ist. Mit einer derartigen Werkzeugkombination lassen sich sowohl Nuten durch den Radialfräser, als auch Ausnehmungen durch den Stirnfräser herstellen. Hierzu fährt das Bearbeitungsaggregat lediglich die erforderliche Position an, indem es die Drehachse der Werkzeugspindel durch Transversalbewegungen der Bearbeitungsaggregates entsprechend positioniert und das benötigte Werkzeug durch Drehung der Werkzeugspindel um die zur Spindel senkrechte Achse in Bearbeitungsposition bringt.

Die Werkzeuge sind hierbei zum Beispiel auf einer Seite der Werkzeugspindel hintereinander angeordnet. Es ist aber auch möglich, daß die Werkzeugspindel einen zentral in der Mitte angeordneten Antrieb aufweist, und die beiden Enden der Werkzeugspindel ein oder mehrere Werkzeuge tragen.

Bei einer weiteren Ausgestaltung der Erfindung ist es weiter vorteilhaft, an den beiden freien Enden der Werkzeugspindel mehrere Werkzeuge im Abstand zueinander anzuordnen, so daß durch ein Bearbeitungsaggregat noch mehr Werkzeuge gehandhabt werden kann. Dabei können zum Beispiel so mehrere Radialfräser nebeneinander angeordnet werden. Hierdurch können entweder zwei zueinander parallele Nuten in einem Arbeitsgang gefräst werden, oder, falls der Abstand der beiden Radialfräser größer ist als die Breite des zu bearbeitenden Werkstückes, verschiedene Nutformen hergestellt werden.

Zur Herstellung einer Rechtecknut kann so ein kantiger Fräser vorgesehen sein, während ein abgerundeter, im Abstand neben diesem angeordneter Radialfräser eine innenrunde Nut herzustellen vermag. Zum Wechsel zwischen beiden Nutformen wird die rechtwinklig zum Werkstück angeordnete Werkzeugspindel einfach um eine entsprechende Strecke quer zum Werkstück bewegt. Je nach Querabmessung des Bearbeitungsaggregats und Beschaffenheit der Werkstückauflage können so nahezu beliebig viele Fräser und Sägeblätter nebeneinander angeordnet werden.

In einer weiteren Ausgestaltung der Erfindung ist vorgesehen, daß am äußeren Ende der Werkzeugspindel ein Stirn- oder Fingerfräser angeordnet ist. Dieser Stirn- oder Fingerfräser ist zusammen zum Beispiel mit einem Radialfräser mit entsprechend großem Durchmesser kombiniert. Dieser Radialfräser weist zum Beispiel eine Länge von ungefähr 10 cm und einem Durchmesser von bis zu 40 cm auf. Durch die Kombination eines großen und eines verhältnismäßig kleinen Fräsers wird die Flexibilität der Abbundanlage wesentlich erhöht. Die Anordnung des äußeren Fingerfräsers dient zum Beispiel für die feine Bearbeitung von Oberflächen zum Beispiel als Oberfräse. Anstelle des Stirn- oder Fingerfräsers ist auch die Verwendung eines Bohrers möglich.

Desweiteren ist es günstig, wenn die Werkzeugspindel im Endbereich eines Standfusses gelagert ist und der Standfuss von einem Stellmotor angetrieben ist, wobei der Drehteller in der im wesentlichen vertikal orientierten Ebene verschiebbar ist.

Die Vielseitigkeit der erfindungsgemäßen Abbundanlage begründet sich aus der Verschiebbarkeit der Werkzeugspindel in einer Ebene, die zur Vorschubrichtung abgewinkelt ist und der Drehbarkeit der Werkzeugspindel um eine zur Spindelachse senkrechte Drehachse. Idealerweise ist die Ebene, in der die Werkzeugspindel verschiebbar ist, rechtwinklig zur Vorschubrichtung angeordnet. Bei horizontalem Vorschub kann die Werkzeugspindel dann durch eine Querbewegung rechtwinklig zur Vorschubrichtung und eine Vertikalbewegung in jede gewünschte Position verfahren werden. Hierzu ist die Spindel zusammen mit dem Spindelantrieb auf einem drehbaren Standfuß angeordnet, der auf einem Traggestell gelagert ist, das in der im wesentlichen vertikal orientierten Ebene verschiebbar ist.

Bei einer weiteren vorteilhaften Ausgestaltung kann der Standfuß mit dem Spindelantrieb und der Werkzeugspindel aber auch auf einem Trägerelement angeordnet sein, das auf einer kreis- oder elipsenförmigen Bahn um das Werkstück herum verfahrbar ist. Hierzu kann die Transporteinrichtung und die Auflage für das Werkstück von einer kreis- oder elipsenförmigen Führungsschiene, beispielsweise einer gerundeten Zahnstange, umschlossen sein, auf der das motorisch angetriebene Trägerelement beweglich ist. Um die Werkzeugspindel bei dieser Ausführungsform in die gewünschten Positionen verfahren zu können, ist hier zusätzlich erforderlich, daß der Abstand zwischen der Werkzeugspindel und dem Trägerelement durch die Anlagensteuerung veränderlich ist. So kann der Standfuß zum Beispiel als Teleskopstange ausgebildet sein, wobei der Spindelantrieb entweder jenseits des Verstellbereiches in der Nähe der Werkzeugspindel angeordnet ist oder eine ebenfalls längenverstellbare Kraftübertragung aufweist. Diese kann beispielsweise aus einem Riementrieb mit geeigneter Spannvorrichtung bestehen.

Bei dieser Ausführungsform wird die Werkzeugspindel nun zunächst durch Anfahren einer bestimmten Winkelposition des Trägerelementes und anschließendes Positionieren in radialer Richtung in die gewünschte Position gebracht. Selbstverständlich kann hierzu die Führungsschiene auch in Form eines Kreis- oder Elipsenausschnittes, ohne die Transportvorrichtung und die Auflage vollständig zu umschließen, ausgebildet sein. Erforderlich ist lediglich eine ausreichende Beweglichkeit des Trägerelementes auf der entsprechenden Kreisbahn.

Hierbei ist es günstig, wenn die Werkzeugspindel relativ zum Trägerelement in Richtung des Werkstückes verschiebbar ist. Durch eine solche Beweglichkeit wird eine optimale Anpassung der Antriebsspindel an das Werkstück erreicht.

Der Vorschub der erfindungsgemäßen Abbundanlage kann sowohl durch eine Bewegung des Bearbeitungsaggregates, als auch durch die Werkstückbewegung oder einer Kombination aus beiden Bewegungen vollzogen werden.

Eine weitere vorteilhafte Ausgestaltung der Erfindung weist eine Kopplung des Werkstückes mit der Transporteinrichtung auf, die es gewährleistet, das Werkstück sowohl vorwärts in Hauptvorschubrichtung, als auch rückwärts in die entgegengesetzte Richtung zu bewegen. Hierdurch kann das Werkstück mehrfach ein Bearbeitungsaggregat passieren und in Kombination mit der Vielzahl der an diesem Bearbeitungsaggregat nun vielseitig einsetzbaren Werkzeugen auf verschiedenste Weise bearbeitet werden. Dabei kann die Bearbeitung in beiden Bewegungsrichtungen erfolgen.

Schließlich kann der Vorschub aber auch durch eine Kombination aus Bewegung des Werkstückes und Bewegung des Bearbeitungsaggregates realisiert werden. Dies hat zwar eine aufwendigere Konstruktion des Bearbeitungsaggregates zur Folge, durch die wesentlich schnellere und weniger träge Relativgeschwindigkeit, die nun als nutzbare Vorschubgeschwindigkeit zur Verfügung steht, läßt sich die Bearbeitung jedoch erheblich beschleunigen.

In einer bevorzugten Ausgestaltung der Erfindung ist vorgesehen, daß der Spindelantrieb auf eine Mehrzahl von Werkzeugspindeln wirkt. Zum Beispiel ist vorgesehen, daß zwei Werkzeugspindeln in einem rechten Winkel zueinander angeordnet sind und jede Werkzeugspindel ein oder mehrere Werkzeuge trägt. Bei einer entsprechenden konstruktiven Auslegung ist somit eine sehr große Flexibilität des Bearbeitungsaggregates möglich, da auf den verschiedenen Spindelhälften unterschiedlichste Werkzeuge anordbar sind und somit ein breites Spektrum an Bearbeitungen ausführbar sind.

Auch ist es günstig, wenn der Abstand zwischen dem Standfuß und dem ihm zugewandten Ende des Futters größer ist als die halbe Maximalbreite des zu bearbeitenden Werkstückes. Durch eine solche Ausgestaltung wird erreicht, daß ein Werkstück mit bekannter Maximalbreite optimal bearbeitet wird, das heißt insbesondere eine Bearbeitung über die ganze Breite des Werkstückes erfolgt. Hierzu ist dann zum Beispiel ein zweimaliges Anfahren der Werkzeugspindel an das Werkstück notwendig, wobei das Anfahren dann von zwei gegenüberliegenden Positionen aus erfolgt. Dadurch erreicht die Erfindung eine optimale Einsetzbarkeit bei entsprechend angepaßter Konstruktion.

Auch ist vorgesehen, daß das Bearbeitungsaggregat einen Hub ausführen kann, der derart bemessen ist, daß eine maximale Höhe des Werkstückes mit den Fräsers bearbeitbar ist, wobei das Bearbeitungsaggregat, insbesondere die Werkzeugspindel soweit absenkbar ist, daß eine Bearbeitung des Werkstückes durch Werkzeuge nicht erfolgt.

Es ist günstig, wenn die Werkzeugspindel über einen Riemen- oder Kettenantrieb von einem auf dem Drehteller befestigten Antriebsmotor angetrieben ist. Durch eine solche Ausgestaltung wird ein vibrationsarmer Antrieb geschaffen. Auf der anderen Seite ist es auch möglich, den Antriebsmotor auf der Antriebsspindel vorzusehen. Für eine optimale Beweglichkeit des Bearbeitungsaggregates ist es hierbei günstig, daß der Antriebsmotor auf dem Drehteller befestigt ist.

Auch ist es günstig, daß ein Wechselmagazin vorgesehen ist, und die Werkzeugspindel zur automatischen Bestückung mit Bearbeitungswerkzeugen an das Wechselmagazin heranfahrbar ist. In einem Wechselmagazin sind zum Beispiel Ersatzwerkzeuge oder Werkzeuge für unterschiedliche Einsatzzwecke vorgehalten. Durch eine solche Ausgestaltung können Rüstzeiten reduziert werden.

Auch ist es günstig, daß das Bearbeitungsaggregat im wesentlichen unterhalb der Transporteinrichtung angeordnet ist und die Auflage im Bereich des Bearbeitungsaggregates eine Ausnehmung für die Werkzeugspindel aufweist. Durch eine solche Ausgestaltung ist eine platzsparende Anordnung des Bearbeitungsaggregates möglich. Es ist auch möglich, daß das Bearbeitungsaggregat seitlich neben der Transporteinrichtung, und bei entsprechender Ausgestaltung der Transporteinrichtung auch oberhalb der Auflage angeordnet ist.

In einer weiteren Ausgestaltung der Erfindung ist vorgesehen, daß die Werkzeugspindel um eine zweite, zur Drehachse und zur Werkzeugspindel rechtwinkligen Drehachse drehbar ist. Durch eine solche Ausgestaltung wird die Flexibilität der Abbundanlage weiter erhöht, da entsprechend schwierig angeordnete Bearbeitungen ausführbar sind.

In der Zeichnung ist die Erfindung schematisch dargestellt. Es zeigen:
- Fig. 1: eine Seitenansicht einer erfindungsgemäßen Abbundanlage,
- Fig. 2: eine Seitenansicht eines Bearbeitungsaggregats einer erfindungsgemäßen Abbundanlage (Einzelheit X in Fig. 1) und in
- Fig. 3: eine Seitenansicht auf das Bearbeitungsaggregat nach Fig. 2, während der Bearbeitung eines Werkstückes.

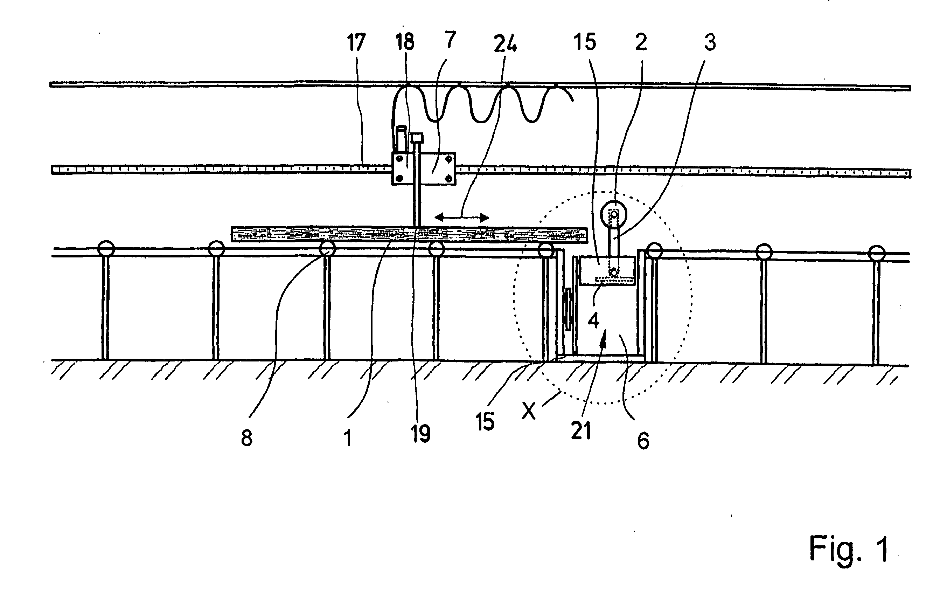

In Figur 1 ist eine Abbundanlage dargestellt, die eine Auflage 8 für ein Werkstück 1 aufweist, das mittels einer Transporteinrichtung 7 in Längsrichtung der Auflage 8 bewegt werden kann. Die Transporteinrichtung besteht aus einer motorisch entlang einer Führungsbahn 17 getriebenen Schleppeinrichtung 18, die über einen Stempel 19 mit dem Werkstück 1 verbunden ist. Unterhalb der Auflage 8 für das Werkstück 1 ist ein Bearbeitungsaggregat 6 angeordnet, das ein in vertikaler sowie in horizontaler Richtung verschiebbares Traggestell 15 mit einer Werkzeugspindel 5 aufweist.

Die Auflage 8 besteht aus einer Vielzahl von Führungsrollen 20, die in Längsrichtung der Auflage 8 hintereinander angeordnet sind und auf denen das Werkstück 1 während der Bewegung durch die Abbundanlage abrollt.

In der Auflage 8 ist eine Aussparung 21 vorgesehen, welche das Bearbeitungsaggregat 6 aufnimmt. Diese Aussparung 21 wird zum Beispiel durch einen entsprechenden Abstand der Führungsrollen 20 gebildet.

Auch andere Ausgestaltungen der Auflage 8 sind möglich. So kann die Auflage 8 zum Beispiel aus einem im Bereich der Bearbeitungsaggregate 6 unterbrochenem Transportband oder einer Gleitebene mit entsprechender Ausnehmung für den Durchlass des Werkzeugspindel 5 bestehen.

Die Verschiebung des Traggestells 15 erfolgt über die im Maschinen- und Anlagenbau üblichen Stellmittel, wie zum Beispiel Hydraulikzylinder oder Motoren, die über eine Maschinensteuerung ansteuerbar sind. Bei dieser Maschinensteuerung kann es sich sowohl um eine herkömmliche Steuerung als auch um eine computergestützte Steuerung (CNC-Steuerung) handeln.

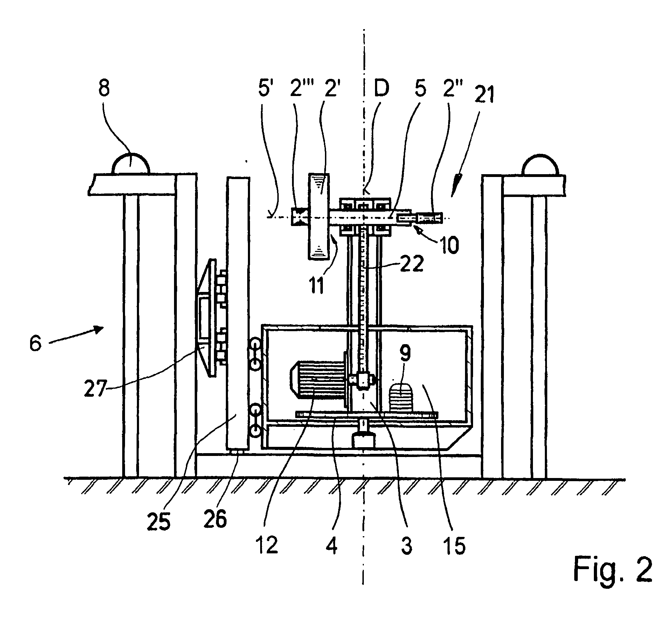

Auf dem Traggestell 15 ist ein Drehteller 4 mit einen Standfuß 3 gelagert, auf dem die Werkzeugspindel 5 mit einem Werkzeug 2 angeordnet ist. Weitere Einzelheiten des Bearbeitungsaggregates 6 ergeben sich aus Figur 2, in der der Ausschnitt X in Figur 1 vergrößert dargestellt ist.

In Figur 2 ist das Bearbeitungsaggregat 6 in einer Ruhestellung dargestellt. Das Traggestell 15 ist in die unterste Position verschoben, so daß die Werkzeugspindel 5 mit den Werkzeugen 2', 2'' und 2''' unterhalb der Ebene der Auflage 8 angeordnet ist. Im unteren Bereich des Traggestells 15 ist der Drehteller 4 drehbar gelagert, auf dem der Standfuß 3 befestigt ist. Weiterhin ist auf dem Drehteller 4 der Antriebsmotor 12 für den Spindelantrieb der Werkzeugspindel 5 angeordnet. Die Antriebskraft wird über einen Riementrieb, zum Beispiel einem Zahn- oder Keilriemen 22, auf die im oberen Bereich des Standfusses 3 angeordnete Werkzeugspindel 5 übertragen. Der Drehteller 4 selbst ist über einen Stellmotor 9 antreibbar, der ebenfalls im Traggestell 15 angeordnet ist. Der Drehteller 4 kann hierzu beispielsweise aus einer Riemenscheibe bestehen, die über einen Keilriemen von dem Stellmotor 9 in Abhängigkeit der Anlagensteuerung gedreht wird. Bei einer anderen Ausführungsform kann der Drehteller 4 auch aus einem Zahnrad bestehen, das von einem durch den Stellmotor 9 getriebenen Ritzel angetrieben wird.

Durch die Anordnung der Werkzeugspindel 5 im oberen Bereich des mit dem Drehteller 4 drehbaren Standfusses 3 ist sie um die Drehachse D drehbar. Die Werkzeugspindel 5 ist mit ihrem mittleren Bereich über zwei Wälzlager im oberen Endbereich des Standfusses 3 gelagert und weist an ihren, zu beiden Seiten des Standfusses 3 hervorragenden Enden einen Radialfräser 2' und einen Stirnfräser 2'' auf. Der Radialfräser 2' weist zusätzlich an seiner der Lagerung der Werkzeugspindel angewandten Seite einen Stirnfräser 2''' auf, mit dem kleinere Nuten oder zylindrische Ausnehmungen gefertigt werden können.

In Fig. 2 ist angedeutet, daß an der Werkzeugspindel auch mehrere Werkzeuge 2 verwendet werden. Das linke des Werkzeugspindel trägt hierbei zunächst einen Radialfräser 3 mit entsprechend großem Durchmesser und an seiner linken Verlängerung der Werkzeugspindel ist ein Fingerfräser 2''' angeordnet, wodurch die Flexibilität der erfindungsgemäßen Abbundanlage erhöht wird. Für die Befestigung der Werkzeuge 2 weisen die Enden der Werkzeugspindel 5 Futter 10,11 auf.

Der Antriebsmotor 12 kann bei einer anderen Ausführungsform der Erfindung auch im Endbereich des Standfusses 3 angeordnet sein. Hierdurch kann die Kraftübertragung auf die Werkzeugspindel 5 vereinfacht werden, jedoch verursacht der relativ schwere Motor 12 unerwünschte Schwingungen des Standfusses, so daß dieser entsprechend zu verstärken ist.

Ferner können auch mehrere Werkzeugspindeln 5 am Standfuß 3 angeordnet sein, die entweder von einem Motor über ein entsprechendes Getriebe angetrieben werden, oder über mehrere Motoren antreibbar sind.

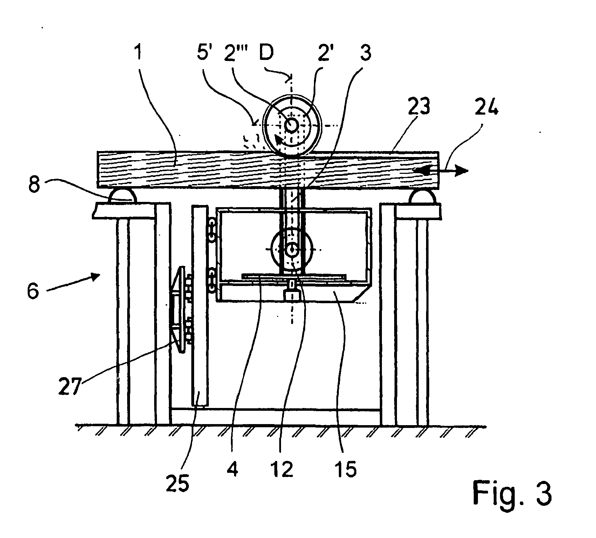

In Figur 3 ist das Bearbeitungsaggregat 6 aus Figur 2 während der Bearbeitung eines balkenförmigen Holzwerkstückes 1 dargestellt. Ein von der Werkzeugspindel 5 angetriebener Radialfräser 2' arbeitet gerade eine Längsnut in die Oberseite des Werkstückes 1 ein. Hierzu ist das Traggestell 15 in vertikale Richtung nach oben und quer zur Auflage 8 verfahren worden, so daß der Radialfräser 2' die erforderliche Position eingenommen hat. Zusätzlich wurde die Werkzeugspindel 5 um 90° um die Drehachse D gedreht, um das Werkzeug 2' für das Fräsen der Längsnut 23 auszurichten.

Durch den Vorschub des von der Transporteinrichtung 7 getriebenen Werkstückes 1 arbeitet der Radialfräser 2' die Nut 23 in das Werkstück 1 ein. Die Transporteinrichtung 7 ist dabei in der Lage, das Werkstück 1 so genau zu führen, daß die gewünschte Fertigungsgenauigkeit erreicht wird. Die Vorschubbewegung der Transporteinrichtung 7 ist hierbei mit dem Doppelpfeil 24 gekennzeichnet. Die Transporteinrichtung 7 prägt auf das Holzwerkstück eine Bewegung in beide Richtungen, vorwärts und rückwärts, ein.

Im Fall der in Figur 3 gezeigten Bearbeitung wird das Werkstück 1 in Vorwärtsrichtung der Abbundanlage bewegt. Nach Abschluß dieser Bearbeitung kann dann durch Richtungswechsel der Werkstückbewegung und durch eventuelle Drehung bzw. Querverschiebung der Werkzeugspindel 5 eine weitere Bearbeitung vorgenommen werden.

Für eine Bewegung des Bearbeitungsaggregates 6 in der Ebene ist vorgesehen, daß das Traggestell 15 an einem Führungsbaum 25 vertikal geführt ist. Die hierzu notwendigen Antriebsmittel sind der Übersichtlichkeit halber nicht gezeigt. Der Führungsbaum 25 ist für eine horizontale Bewegung verschiebbar angeordnet. Der Führungsbaum 25 ist hierzu auf Gleitlager 26 gelagert. Der Führungsbaum 25 ist zum Beispiel auf beiden Seiten des Traggestelles 15 vorgesehen. Für die Bewegung in horizontaler Richtung ist eine Führung 27 vorgesehen. Durch eine solche Ausgestaltung wird eine Bewegung des Traggestelles in einer Ebene, die hier senkrecht zur Zeichenebene ist, erreicht. Durch eine entsprechende Ausgestaltung der Führung 27 ist eine andere Ausgestaltung wählbar.

Die Definition der Spindelachse 5' umfaßt hierbei auch die Achse, um welche sich das Werkzeug 2 dreht.

Der erfindungsgegenstand ergibt sich nicht nur aus dem Gegenstand der einzelnen Patentansprüche, sondern auch aus der Kombination der einzelnen Patentansprüche untereinander.

## Patentansprüche

1. Abbundanlage zur Bearbeitung von Strangmaterial, insbesondere zur Bearbeitung von stangenförmigen Holzwerkstücken (1), Holzbalken, Brettern und dergleichen, wobei die Abbundanlage eine Auflage (8) und eine Transporteinrichtung (7) zum Auflegen und Transportieren des Strangmaterials aufweist, mit wenigstens einem, entlang der Transporteinrichtung (7) angeordneten Bearbeitungsaggregat (6) mit einer von einem Spindelantrieb angetriebenen Werkzeugspindel (5), welche in einer Ebene verschiebbar ist und an der ein Werkzeug (2) für die Bearbeitung des Werkstückes (1) angeordnet ist, wobei die Werkzeugspindel (5) um eine zur Spindelachse (5') senkrechte Drehachse (D) drehbar ist, **dadurch gekennzeichnet, dass** die Werkzeugspindel (5) im oberen Bereich eines Standfußes (3) gelagert ist und das gegenüberliegende Ende des Standfußes (3) auf einem drehbar gelagerten Drehteller (4) befestigt ist und dass der Vorschub für die Bearbeitung des Werkstückes (1) durch das Bearbeitungsaggregat (6) von der Vorschubbewegung der Transporteinrichtung (7) abgeleitet ist.

2. Abbundanlage nach Anspruch 1, **dadurch gekennzeichnet, dass** der Spindelantrieb eine Mehrzahl von Werkzeugen (2) gleichzeitig antreibt.

3. Abbundanlage einem oder beiden der vorhergehenden Ansprüche, **dadurch gekennzeichnet, dass** auf der Werkzeugspindel (5) eine Mehrzahl von Werkzeugen (2) angeordnet ist.

4. Abbundanlage einem oder mehreren der vorhergehenden Anspruch, **dadurch gekennzeichnet, dass** die Werkzeugspindel (5) im Endbereich des Standfußes (3) gelagert ist.

5. Abbundanlage nach einem oder beiden der vorhergehenden Ansprüche, **dadurch gekennzeichnet, dass** die Werkzeuge (2) mehrere, im Abstand voneinander angeordnete Fräser (2') sind.

6. Abbundanlage nach einem oder mehreren der vorhergehenden Ansprüche, **dadurch gekennzeichnet, dass** am äußeren Ende der Werkzeugspindel (5) ein Stirn- oder Fingerfräser (2") angeordnet ist.

7. Abbundanlage nach einem oder mehreren der vorhergehenden Ansprüche, **dadurch gekennzeichnet, dass** der Spindelantrieb auf eine Mehrzahl von Werkzeugspindeln (5) wirkt.

8. Abbundanlage nach einem oder mehreren der vorhergehenden Ansprüche, **dadurch gekennzeichnet, dass** der Standfuß von einem Stellmotor (9) angetrieben ist, wobei der Drehteller (4) in der im wesentlichen vertikal orientierten Ebene verschiebbar ist.

9. Abbundanlage nach einem oder mehreren der vorhergehenden Ansprüche, **dadurch gekennzeichnet, dass** die Werkzeugspindel (5) in ihrem mittleren Bereich am Standfuß (3) gelagert ist und die beiden seitlich herausragenden Enden der Werkzeugspindel (5) jeweils ein Futter (10, 11) zur Aufnahme eines oder mehrerer Bearbeitungswerkzeuge(s) (2) aufweisen.

10. Abbundanlage nach Anspruch 9, **dadurch gekennzeichnet, dass** der Abstand zwischen dem Standfuß (3) und dem ihm zugewandten Ende des Futters (10, 11) größer ist, als die halbe Maximalbreite des zu bearbeitenden Werkstückes (1).

11. Abbundanlage nach einem oder mehreren der vorhergehenden Ansprüche, **dadurch gekennzeichnet, dass** die Werkzeugspindel (5) über einen Riemen- oder Kettenantrieb von einem auf dem Drehteller (4) befestigten Antriebsmotor (12) angetrieben ist.

12. Abbundanlage nach einem oder mehreren der vorhergehenden Ansprüche, **dadurch gekennzeichnet, dass** ein Wechselmagazin vorgegehen ist und die Werkzeugspindel zur automatischen Bestückung mit Bearbeitungswerkzeugen an das Wechselmagazin heranfahrbar ist.

13. Abbundanlage nach einem oder mehreren der vorhergehenden Ansprüche, **dadurch gekennzeichnet, dass** das Bearbeitungsaggregat (6) im wesentlichen unterhalb der Transporteinrichtung (7) angeordnet ist und die Auflage (8) im Bereich des Bearbeitungsaggregats (6) eine Ausnehmung für die Werkzeugspindel (5) aufweist.

14. Abbundanlage nach einem oder mehreren der vorhergehenden Ansprüche, **dadurch gekennzeichnet, dass** die Bewegungsrichtung der Transporteinrichtung (7) umkehrbar ist, so dass das Werkstück (1) durch das Bearbeitungsaggregat (6) in zwei einander entgegengesetzten Vorschubrichtungen bearbeitbar ist.

15. Abbundanlage nach einem oder mehrere der vorhergehenden Ansprüche, **dadurch gekennzeichnet, dass** die Werkzeugspindel (5) um eine zweite, zur Drehachse (D) und zur Werkzeugspindel (5) rechtwinklige Drehachse drehbar ist.

16. Abbundanlage nach einem oder mehreren der vorhergehenden Ansprüche, **dadurch gekennzeichnet, dass** die Werkzeugspindel im Endbereich eines Standfußes gelagert ist und der Standfuß von einem Stellmotor angetrieben ist, wobei der Drehteller auf einem motorisch angetriebenen Trägerelement gelagert ist, das an einer kreis- oder ellipsenförmigen Führungsschiene geführt ist, die in einer zur Vorschubrichtung abgewinkelten Ebene, die Transporteinrichtung und die Auflage umschließend angeordnet ist.

17. Abbundanlage nach Anspruch 16, **dadurch gekennzeichnet, dass** die Werkzeugspindel (5) relativ zum Trägerelement in Richtung des Werkstückes (1) verschiebbar ist.

## Claims

1. Joining installation for machining elongated material, in particular for machining bar-shaped timber workpieces (1), timber joists, boards and the like, wherein the joining installation exhibits a bed (8) and a conveyor (7) for supporting and conveying the elongated material, with at least one machining unit (6) arranged along the conveyor (7) and having a tool spindle (5) which is driven by a spindle drive and is displaceable in one plane and on which is arranged a tool (2) for the machining of the workpiece (1), the tool spindle (5) being pivotable about a pivot axis (D) perpendicular to the spindle axis (5'), **characterised in that** the tool spindle (5) is mounted in the upper area of a pedestal (3) and the opposite end of the pedestal (3) is fastened on a pivotably mounted turntable (4) and **in that** the advance for the machining of the workpiece (1) by the machining unit (6) is derived from the advance movement of the conveyor (7).

2. Joining installation according to claim 1, **characterised in that** the spindle drive drives a plurality of tools (2) at the same time.

3. Joining installation according to one or both of the preceding claims, **characterised in that** a plurality of tools (2) are arranged on the tool spindle (5).

4. Joining installation according to one or more of the preceding claims, **characterised in that** the tool spindle (5) is mounted in the end area of the pedestal (3).

5. Joining installation according to one or both of the preceding claims, **characterised in that** the tools (2) are a plurality of milling cutters (2') arranged a distance from one another.

6. Joining installation according to one or more of the preceding claims, **characterised in that** a face or end milling cutter (2") is arranged at the outer end of the tool spindle (5).

7. Joining installation according to one or more of the preceding claims, **characterised in that** the spindle drive acts on a plurality of tool spindles (5).

8. Joining installation according to one or more of the preceding claims, **characterised in that** the pedestal is driven by a control motor (9), with the turntable (4) displaceable in the essentially vertically orientated plane.

9. Joining installation according to one or more of the preceding claims, **characterised in that** the tool spindle (5) is mounted in its central area on the pedestal (3) and the two laterally projecting ends of the tool spindle (5) each exhibit a chuck (10, 11) for receiving one or more machining tools (2).

10. Joining installation according to claim 9, **characterised in that** the distance between the pedestal (3) and the end of the chuck (10, 11) facing it is greater than half the maximum width of the workpiece (1) to be machined.

11. Joining installation according to one or more of the preceding claims, **characterised in that** the tool spindle (5) is driven by means of a belt or chain drive by a driving motor (12) fastened on the turntable (4).

12. Joining installation according to one or more of the preceding claims, **characterised in that** a changer magazine is provided and the tool spindle can be moved up to the changer magazine for automatic fitting with machining tools.

13. Joining installation according to one or more of the preceding claims, **characterised in that** the machining unit (6) is essentially arranged underneath the conveyor (7) and the bed (8) exhibits an opening for the tool spindle (5) in the area of the machining unit (6).

14. Joining installation according to one or more of the preceding claims, **characterised in that** the direction of movement of the conveyor (7) is reversible so that the workpiece (1) can be machined by the machining unit (6) in two opposing advance directions.

15. Joining installation according to one or more of the preceding claims, **characterised in that** the tool spindle (5) is pivotable about a second pivot axis at right angles to the pivot axis (D) and to the tool spindle (5).

16. Joining installation according to one or more of the preceding claims, **characterised in that** the tool spindle is mounted in the end area of a pedestal and the pedestal is driven by a control motor, with the turntable mounted on a motor-driven carrier element which is guided on a circular or elliptical guide rail which is arranged in a plane at an angle to the advance direction, surrounding the conveyor and the bed.

17. Joining installation according to claim 16, **characterised in that** the tool spindle (5) is displaceable relative to the carrier element in the direction of the workpiece (1).

## Revendications

1. Ligne d'usinage de matériaux longs et en particulier d'usinage de pièces de bois de forme allongée (1), comme des poutres, des planches et des matériaux similaires, comportant un support (8), un dispositif de transport (7) supportant et transportant le matériau allongé posé et au moins une machine d'usinage (6) située le long du dispositif de transport (7) et comportant un arbre de rotation commandé (5), déplaçable dans un plan et maintenant un outil (2) pour l'usinage de la pièce à usiner (1), l'arbre de rotation (5) étant pivotable autour d'un axe de rotation (D) perpendiculaire à son axe de rotation (5'), **caractérisée en ce que** l'arbre de rotation (5) est maintenu au niveau de la partie supérieure d'une colonne de support (3) dont la partie inférieure est fixée sur une assiette pivotable (4) et **en ce que** la force d'avancement pour l'usinage de la pièce à usiner (1) par la machine d'usinage (6) est fournie par le dispositif de transport (7).

2. Ligne d'usinage selon la revendication 1, **caractérisée en ce que** la commande de l'arbre de rotation commande simultanément plusieurs outils (2).

3. Ligne d'usinage selon une ou deux des revendications précédentes, **caractérisée en ce qu'**un ensemble d'outils est situé au niveau de l'arbre de rotation (5).

4. Ligne d'usinage selon une ou plusieurs des revendications précédentes, **caractérisée en ce que** l'arbre de rotation (5) est maintenu par l'extrémité de la colonne de support (3).

5. Ligne d'usinage selon une ou deux des revendications précédentes, **caractérisée en ce que** les outils (2) sont plusieurs fraises (2') séparées les unes des autres.

6. Ligne d'usinage selon une ou plusieurs des revendications précédentes, **caractérisée en ce que** l'extrémité extérieure de l'arbre de rotation (5) comporte une fraise frontale ou allongée (2").

7. Ligne d'usinage selon une ou plusieurs des revendications précédentes, **caractérisée en ce que** la commande de l'arbre de rotation agit sur plusieurs autres arbres de rotation (5) comportant chacun des outils.

8. Ligne d'usinage selon une ou plusieurs des revendications précédentes, **caractérisée en ce que** la colonne de support est commandée par un moteur pas à pas (9) et **en ce que** l'assiette pivotante (4) est déplaçable dans un plan approximativement vertical.

9. Ligne d'usinage selon une ou plusieurs des revendications précédentes, **caractérisée en ce que** la partie médiane de l'arbre de rotation (5) est maintenue par la colonne de support (3) et **en ce que** les deux extrémités de l'arbre de rotation (5) dépassant ce support comportent chacune un mandrin (10, 11) permettant de recevoir un ou plusieurs outils d'usinage (2).

10. Ligne d'usinage selon la revendication 9, **caractérisée en ce que** la distance entre le support (3) et l'extrémité du mandrin (10, 11) la plus proche du support est supérieure à la moitié de la largeur maximale de la pièce à usiner (1).

11. Ligne d'usinage selon une ou plusieurs des revendications précédentes, **caractérisée en ce que** l'arbre de rotation est commandé à l'aide de courroies ou de chaînes par un moteur (12) fixé sur l'assiette pivotable (4).

12. Ligne d'usinage selon une ou plusieurs des revendications précédentes, **caractérisée en ce qu'**un magasin de recharge est prévu et **en ce que** l'arbre de rotation peut être déplacé vers ce magasin de recharge, permettant un échange automatique des outils d'usinage.

13. Ligne d'usinage selon une ou plusieurs des revendications précédentes, **caractérisée en ce que** la machine d'usinage (6) est située approximativement en-dessous du dispositif de transport (7) et **en ce que** le support (8) possède un évidement au niveau de la machine d'usinage (6) pour le passage de l'arbre de rotation (5).

14. Ligne d'usinage selon une ou plusieurs des revendications précédentes, **caractérisée en ce que** la direction du mouvement du dispositif de transport (7) peut être inversée afin de,pouvoir usiner la pièce à usiner (1) par la machine d'usinage (6) dans deux directions mutuellement opposées.

15. Ligne d'usinage selon une ou plusieurs des revendications précédentes, **caractérisée en ce que** l'arbre de rotation (5) peut pivoter autour d'un deuxième axe perpendiculaire à l'axe de rotation (D) et à l'axe de rotation de l'arbre de rotation (5).

16. Ligne d'usinage selon une ou plusieurs des revendications précédentes, **caractérisée en ce que** l'arbre de rotation est maintenu par une extrémité d'une colonne de support commandée par un moteur pas à pas et **en ce que** l'assiette pivotable est fixée sur un élément de support commandé par un moteur et guidé par un rail de forme circulaire ou ellipsoïde placé sur un plan formant un angle avec la direction d'avancement du dispositif de transport et incluant celui-ci ainsi que le support.

17. Ligne d'usinage selon la revendication 16, **caractérisée en ce que** l'arbre de rotation (5) peut être déplacé par rapport à l'élément de support en direction de la pièce à usiner (1).
